# EUROPEAN PATENT SPECIFICATION

(11) **EP 2 318 125 B1**
(45) Date of publication and mention of the grant of the patent: **25.04.2012**
(21) Application number: 09767097.0
(22) Date of filing: 19.06.2009
(51) Int. Cl.: B01D 63/10, B01D 65/08

(54) **CROSS-FLOW FILTRATION APPARATUS WITH BIOCIDAL FEED SPACER**
QUERSTROMFILTRATIONSVORRICHTUNG MIT BIOZIDEM FEED-SPACER
APPAREIL DE FILTRATION TANGENTIELLE ÉQUIPÉ D'UNE ENTRETOISE D'ALIMENTATION BIOCIDE

(30) Priority: 20.06.2008 US 74257 P
(43) Date of publication of application: 11.05.2011
(73) Proprietor: Hydranautics, Oceanside, CA 92058 (US)
(72) Inventor: SHELBY, Irving, San Diego CA 92131 (US); BARTELS, Craig Roger, San Diego CA 92128 (US)
(74) Representative: Nübold, Henrik
(86) International application number: PCT/US2009/003679
(87) International publication number: WO 2009/154784

(56) References cited:
- DE-A1-102006 042 876
- JP-A- 2004 243 194
- US-A- 5 102 547
- US-A- 5 868 933

## Description

### BACKGROUND OF THE INVENTION

The present invention generally relates to water filtration apparatuses. In particular, the present invention relates to a cross-flow water filtration apparatus that includes a biocidal feed spacer.

In the field of producing drinking water, that is, in use for water treatment, such as water purification and effluent treatment, separation membranes are being substituted for conventional sand filtration and coagulation sedimentation, and are being used to improve the quality of treated water. Reverse osmosis filtration systems are one of the most common separation membrane systems for treating water and improving water quality in general.

While reverse osmosis is an effective technique in treating water, the ability to remove dissolved particles from water comes with a price. Bacteria contained in the influent water are arrested by the semi-permeable membranes of reverse osmosis systems and consequently accumulate on the surface of the membranes. Bacteria typically multiply every 30 to 60 minutes, and their growth is logarithmic. For example, a single bacterial cell will result in 16 million bacteria in 24 hours. The explosive growth of bacteria results in fouling of the membrane, which reduces the flow of water through the membrane and can adversely affect the filtering properties of the membrane.

Further, fouled membranes require higher operating pressures, which in turn increase operating costs and result in a shorter life span of filter membranes used in reverse osmosis processes. While various attempts have been made to clean such fouled membranes, cleaning of reverse osmosis membranes using chemicals requires about 20% of the total operating time of a reverse osmosis facility, thereby resulting in a dramatic reduction in the overall efficiency of the process. Standard fouling factors for reverse osmosis, ultrafiltration and microfiltration membranes are typically about 30%, 80% and 90%, respectively. The fouling rate is one of the most important considerations in designing a water treatment plant that utilizes a membrane based process.

Fouled membranes are difficult to clean and reduce the water quality of the filtered water. As a result of the bacterial growth on the membrane, a gelatinous biofilm is formed on the upstream surface of the membrane. The biofilm is very difficult to remove, except through the use of strong chemical oxidants that damage the membrane. The biofilm protects the bacteria from normal cleaning and sanitizing procedures and leads to a break-through of bacteria across the membrane. The bacterial penetration could also occur along defects in the membrane. Typically, bacteria are detected on the downstream side of the membrane within 48 to 72 hours. The downstream side of the membrane becomes noticeably discolored or black over time as the bacteria colonize on the downstream side of the membrane and form a biofilm. Such biological fouling can also lead to the formation of localized extremes in pH that can further damage the membrane. Thus, conventional semi-permeable filters, standing alone, rarely provide ultrapure (*i.e*., bacteria free) water. In many instances, reverse osmosis, ultrafiltration, nanofiltration and microfiltration processes must be followed by polishing filters to clean the water of bacteria.

The problem of water filter membranes suffering from biofouling is known in the art. Attempts to address this problem include adding disinfectant, such as chorine and chloramine, to the water. However, filter membranes, such as composite polyamide membranes are very susceptible to oxidation damage, such that most oxidants, *e.g*., chlorine, cannot be used in membrane based processes. Another approach has been to add some form of antimicrobial additive to the membrane surface. For example, U.S. Patent No. 6,540,915 to Patil discloses incorporating various antimicrobial agents into a polymeric membrane suitable for reverse osmosis, ultrafiltration, nanofiltration and microfiltration. However, the surfaces of such membranes are very complex and sensitive to additive components, and the introduction of such foreign chemicals (*e.g.*, antimicrobial agents) can reduce the salt rejection and permeability of the membrane.

Reverse osmosis filters are also typically manufactured as either "dead-end" filtration filters or "cross-flow" filtration filters. With dead-end filtration, all of the feed solution (*i.e*., water to be filtered) passes through the filter medium. As a result, all particles and dissolved solutes will be retained on or within the filter medium. This results in a build up of filter cake (concentration polarization) on the filter medium's surface, which impacts the overall efficiency and efficacy of the dead-end filter and biofouling of the filter medium.

In cross-flow filtration, feed solution is designed to flow across a surface of the filter medium at some pressure (*e.g*., a pressure greater than the osmotic pressure of the feed solution) such that a percentage of the feed solution is driven across the filter medium. The cross-flow filtration method allows for the filtration of feed solution with higher solids contents, as such solids will be washed across the surface of the filter medium as opposed to being deposited thereon, as in dead-end filtration processes. Such flow of feed solution across a filter medium also impacts how cross-flow filtration filter medium become fouled compared to dead-end filters.

German patent application no. 10 2006 042 876 A1 discloses an asymmetrical membrane and a spacer, comprising an inorganic biocidal coating for use as reverse osmosis membrane.

An antimicrobial filter cartridge comprising yarns impregnated with a biocidal agent as 5-chloro-2-(2,4 dichlorophenoxy)phenol having a perforated core member wrapped with microporous membranes is described by Gilbert Patrick and Arvind S. Patil in U.S. patent application no. 5,868,933 A.

Further, Japanese patent application no. 2004 243 194 A discloses an electric deionization apparatus, which is constituted by alternately arranging cation and anion exchange members between an anode chamber provided with an anode and a cathode chamber provided with a cathode and alternately forming desalting chambers and thickening chambers partitioned by these exchange members, whereas antibacterial spacers are attached to the thickening chambers.

Due to the nature of a cross-flow filter's spiral wound design, such filters are typically engineered to allow only a one way flow through the system. As such, the filter's spiral wound design does not allow for backpulsing with water or air agitation to scour its surface and remove solids. Since accumulated materials cannot be removed from the membrane surfaces, such cross-flow filter systems are susceptible to fouling and loss of production capacity. Accordingly, there is still a need for a water separation apparatus, such as a reverse osmosis cross-flow filtration filter, that can address the aforementioned problems of biofouling in the treatment of water.

### BRIEF SUMMARY OF THE INVENTION

The present invention provides a water filtration system that can reduce the amount of biofouling experienced by water filtration systems. To reduce the amount of biofouling of water filtration systems, such as reverse osmosis, ultrafiltration, nanofiltration and microfiltration systems, the present invention provides for a biocidal feed spacer for cross-flow filtration apparatuses that includes one or more broad spectrum biocidal agents.

The present invention provides a cross-flow filtration device comprising: a perforated central tube; and a semi-permeable membrane spirally wound around the perforated central tube, the semi-permeable membrane including: a permeate carrier, a membrane adjacent the permeate carrier, and a feed spacer adjacent the membrane, wherein the feed spacer includes at least one biocidal agent and wherein the feed spacer is formed from a polymeric material mixed with at least one biocidal agent selected from the group consisting of a quaternary ammonium compound, a silane derivative, and 5-chloro-2-(2,4-dichlorophenoxy)phenol, at about 0.01% to about 10% by weight, via an extrusion process to form a homogenous impregnation with the at least one biocidal agent throughout the entire spacer, the feed spacer comprising a thickness of about 0.020 to 0.050 inches.

### BRIEF DESCRIPTION OF THE SEVERAL VIEWS OF THE DRAWINGS

The foregoing summary, as well as the following detailed description of the preferred embodiments of the invention, will be better understood when read in conjunction with the appended drawings. For the purpose of illustrating the invention, there are shown in the drawings embodiments of the invention which are presently preferred. It should be understood, however, that the invention is not limited to the precise arrangements and instrumentalities shown. In the drawings:

Fig. 1 is a perspective schematic view of a cross-flow filtration apparatus having a biocidal feed spacer in accordance with a first embodiment of the present invention;

Fig. 2 is a cross-sectional elevational view of a cross-flow filtration apparatus having a biocidal feed spacer in accordance with a second embodiment of the present invention;

Fig. 3 is a photograph of a perspective view of the biocidal feed spacer of Fig. 1 highly magnified;

Fig. 4A is a top plan view of an end cap applicable to embodiments of the present invention;

Fig. 4B is a cross-sectional, elevational view of the end cap of Fig. 4A;

Fig. 5A are photographs of a portion of a conventional feed spacer, exhibiting bacterial growth on a nutrition medium;

Fig. 5B are photographs of a portion of a biocidal feed spacer in accordance with an embodiment of the present invention, exhibiting greatly reduced bacterial growth on a nutrition medium;

Fig. 6A is a photograph of a portion of a conventional feed spacer, exhibiting bacterial growth after exposure to a flow of feed solution;

Fig. 6B is a photograph of a portion of a biocidal feed spacer in accordance with an embodiment of the present invention, exhibiting greatly reduced bacterial growth after exposure to a flow of feed solution;

Fig. 7A is a photograph of a portion of a conventional reverse osmosis filter element with feed spacer partially removed, exhibiting bacterial growth after six months of use; and

Fig. 7B is a photograph of a portion of a reverse osmosis filter element with a partially removed biocidal feed spacer in accordance with an embodiment of the present invention, exhibiting greatly reduced bacterial growth on both the feed spacer and membrane surfaces after six months of use.

### DETAILED DESCRIPTION OF THE INVENTION

The present invention provides for a cross-flow water filtration apparatus that reduces the amount of biofouling of the water filtration apparatus' membrane layer. The water filtration apparatus of the present invention is a spiral wound cross-flow filtration apparatus that includes a biocidal feed spacer having a biocidal agent. The water filtration apparatus can be, for example, a reverse osmosis filter, an ultrafiltration filter, a nanofiltration filter, or a microfiltration filter. Such filters are used, for example, to purify water, desalinate seawater, and filter surface water and wastewater. The term "biocide," "biocidal" or "biocidal agent" as used herein is given its ordinary and customary meaning and includes any chemical substance capable of killing living organisms and/or inhibiting their growth. The term includes, but is not limited to, pesticides and antimicrobial agents, as well as biostatic (bacteriostatic) agents.

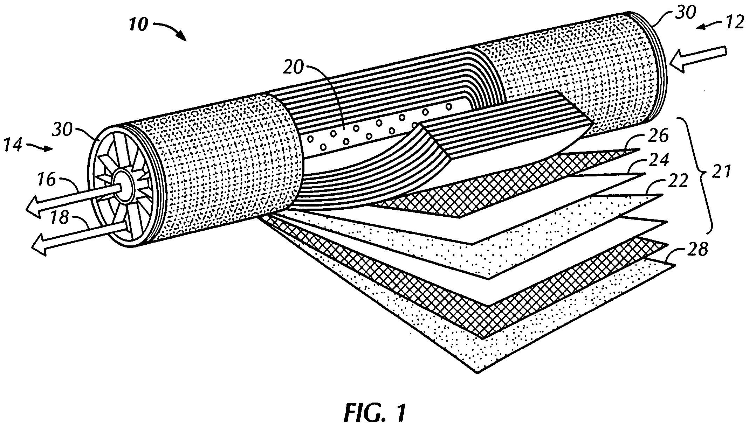

In one embodiment of the present invention, the water filtration apparatus is a reverse osmosis cross-flow filter 10, as shown in Fig. 1. Alternatively, the cross-flow water filtration apparatus 10 can be an ultrafiltration apparatus, a nanofiltration apparatus, a microfiltration apparatus, or any other cross-flow water filtration apparatus having at least one membrane layer and at least one biocidal feed spacer layer.

The reverse osmosis cross-flow filter 10 is generally shaped in a cylindrical fashion. In operation, feed solution (*i.e*., water or fluid to be treated) enters the inlet end 12 and exits the outlet end 14. As the feed solution is filtered by the reverse osmosis filter 10, the feed solution exits the outlet end 14 as permeate 16 and concentrate 18, the permeate 16 being the filtered water (*i.e.*, dilute solution) and the concentrate 18 being the high concentration solution (*i.e*., contaminant containing solution).

The reverse osmosis cross-flow filter 10 is generally configured with a perforated central tube 20, a semi-permeable membrane 21 wrapped around the perforated central tube 20 and an outer wrap 28. Preferably, the reverse osmosis filter 10 is configured with the semi-permeable membrane 21 spirally wound about the perforated central tube 20. As such, the cross-flow filter 10 is also known as a spiral wound filter as the various layers of the semi-permeable membrane 21 are spirally wound around the perforated central tube 20. However, it is within the intent and scope of the present invention that the cross-flow filter can be configured in a variety of configurations readily known in the art for water filtration apparatuses, such as a hollow-fiber configuration, a plate and frame configuration, or a non-layered configuration.

The perforated central tube 20 is generally configured as a hollow cylindrical tube with perforations to allow the passage of permeate (*e.g*., filtered water) to flow through. The perforated central tube 20 is preferably from about 30.5 to 182.9 cm (1 ft. to 6 ft.) in length with an internal diameter of about 2.54 to 15.24 cm (1 to 6 inches). The perforated central tube 20 also includes perforations of about 0.16 to 0.79 cm (1/6 to 5/16) inch in diameter with a perforation density of about 80 to 120 perforations per square feet. The perforated central tube 20 can be made from metals, polymers, composites and combinations thereof. Preferably, the perforated central tube 20 is made from extruded acrylonitrile butadiene styrene (ABS) or Noryl^{®}, a blend of polyphenylene oxide and polystyrene. The construction material of the perforated central tube 20 must be non-leaching and chemically compatible for use in various filtration applications. The perforated central tube 20 must also be configured to withstand the necessary structural loads, *e.g.*, columnar and torsional rotational loads applied during use and manufacturing, and the applied pressures used in filtration processes.

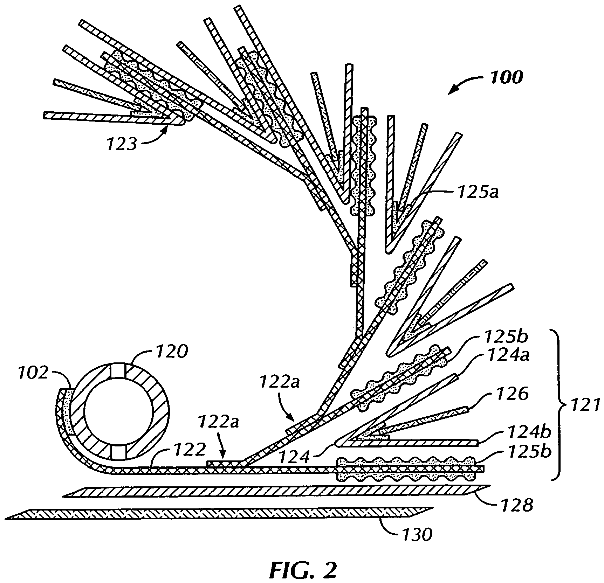

The semi-permeable membrane 21 includes a permeate carrier layer 22, a membrane layer 24 and a biocidal feed spacer layer 26. The semi-permeable membrane 21 is spirally wound around the perforated central tube 20. Preferably, the semi-permeable membrane 21 is wound around the perforated central tube 20 about 1 to 6 times, resulting in a cross-flow filter 10 with an overall diameter of about 6.35 to 45.7 cm (2 ½ to 18 inches). The semi-permeable membrane 21 is connected to the perforated central tube 20, as illustrated in Fig. 2 via an adhesive attachment. Such adhesive attachments are known in the art and a detailed discussion of them is not necessary for a complete understanding of the present invention. However, exemplary adhesive attachments are disclosed in U.S. Patent No. 4,235,723.

Membrane layers, such as membrane layer 24, typically include a crosslinked polyamide salt rejecting layer which is prepared with a variety of base supporting layers and by a variety of methodologies. Such membranes are known in the art and a detailed description of their structure, function and operation is not necessary for a complete understanding of the present invention. However, exemplary membranes applicable to the present invention are disclosed in U.S. Patent Nos. 4,277,344; 4,520,044; 5,254,261; and 5,576,057.

The permeate carrier 22 is configured adjacent the membrane layer 24 and preferably between layers of the membrane 24 for providing a channel or transport of permeate through the spirally wound semi-permeable membrane 21 to the perforated central tube 20. An exemplary permeate carrier 22 can be formed from epoxy coated or non-coated polyester and is preferably about 152 µm to 381 µm (0.006 to 0.015 inches) in thickness.

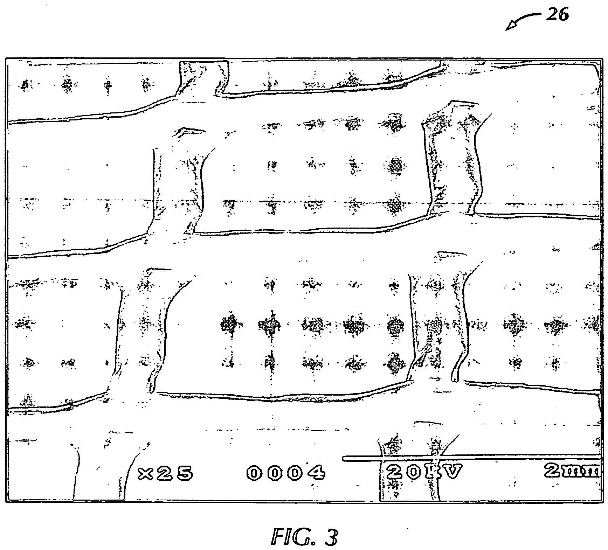

The feed spacer 26 (also known as the "feed channel spacer") is a generally three-dimensional structured layer that is configured to have a high degree of porosity, as shown in Figs. 1 and 3. Preferably, the feed spacer 26 is configured in a cross-hatching or netting formation or mesh formation. The feed spacer 26 can be formed from any material sufficient for its intended use, such as a polymeric material, metal, alloy, composite, textile, or the like. Various polymeric materials applicable to the feed spacer 26 can include, for example polyolefins, particularly polyethylene or polypropylene, acrylics, acrylonitrile butadiene styrene (ABS), cellulose acetate, ethylene vinyl acetate (EVA), fluoropolymers, latex, plastisols, polyamides, nylons, polybutylene terephthalate (PBT), polycarbonate, polyester, polyethylene terephthalate (PET), polymethyl methacrylate (PMMA), polyoxymethylene, polyphenylene sulfide, polystyrene, polyurethanes, polyvinyl chloride (PVC), thermoplastic elastomers (TPE), and thermoplastic urethane. The feed spacer 26 is configured to be 508 µm to 1270 µm (0.020 to 0.050 inches) thick and preferably about 660 µm to 863 µm (0.026 to 0.034 inches) thick, to form a space between the wound layers of the semi-permeable membrane 21. The space formed by the feed spacer 26 enables a separation of two adjacent semi-permeable membrane sheets which allows inbound feed solution to flow across the membrane 24 while promoting turbulent fluid flow contiguous to the membrane surface, which advantageously keeps membrane surfaces clean and limits concentration polarization due to the disturbed or transitional fluid flow about the membrane surfaces. The unsteady or transitional flow of feed solution is promoted in part by the mesh formation of the feed spacer 26.

The feed spacer 26 is also configured to include a biocidal agent or a combination of one or more biocidal agents so as to be a biocidal feed spacer 26. The biocidal agent is an agent capable of inhibiting or reducing the amount of biofouling within a water filtration apparatus, such as the cross-flow reverse osmosis filter 10. Biocidal agents applicable to the present embodiment include biocides based on detergents, dyes, halogens, precious metals, phenolic compounds, quaternary ammonium compounds, and silane derivatives. Preferably, the biocidal agent is 5-chloro-2-(2,4-dichlorophenoxy)phenol (also known as Triclosan).

As a wide variety of biocidal agents with varying degrees of activity are applicable to the present invention, the biocidal feed spacer 26 is configured with a bioactively effective amount of biocidal agent based upon the particular biocidal agent used. The term "bioactively effective amount" as used herein means an amount of biocidal agent incorporated into the feed spacer 26 necessary to reduce and/or inhibit the amount of biofouling or the formation of a biofilm within the water filtration apparatus compared to a feed spacer 26 without a biocidal agent. The biocidal feed spacer 26 includes about 0.01% to about 10% by weight biocidal agent and preferably about 0.25% to about 0.5% by weight biocidal agent.

The biocidal feed spacer 26 is formed from a polymeric material mixed with the biocidal agent via an extrusion process.

The biocidal feed spacer 26 is preferably formed by an extrusion process that includes an extrusion die with two sets of counter rotating slots for extruding filaments to form a mesh-like netting framework, as shown in Fig. 3. An exemplary extrusion process for manufacturing the mesh-like netting framework is described in U.S. Patent No. 4,353,956.

In manufacturing the biocidal feed spacer 26, via an extrusion process, a master batch is initially produced. The master batch is a concentrated mixture of the biocidal agent dispersed in an encapsulated carrier material. Typically the encapsulated carrier material is the same material as that used to form the feed spacer 26. The biocidal agent is dispersed within the carrier material by melting the carrier material and then mixing the biocidal agent with the melt to form a uniform mixture. The carrier material is then cooled and cut into a granular shape, such as prills. The master batch is then mixed with resin from which the feed spacer is to be extruded to form the biocidal feed spacer 26. The amount of master batch material added to the resin will depend upon the concentration of biocidal agent required for the biocidal feed spacer 26. As a result, the biocidal feed spacer 26 is impregnated with the biocidal agent in a homogenous manner throughout the entire feed spacer 26. The impregnated nature of the biocidal agent further results in a non-migrating biocidal agent, which provides for longer lasting inhibition of biogrowth.

The membrane 24 of the reverse osmosis filter can be any conventional membrane readily known and used in the field of reverse osmosis filtration, ultrafiltration and microfiltration. An exemplary membrane applicable to the present invention can include a polyester base layer, a polysulfone layer and a polyamide layer. The polysulfone layer can be a semi-permeable polysulfone layer, and the polyamide layer can be a microporous polyamide layer. Such membranes 24 can be manufactured in a conventional casting operation.

The above-described layers of the semi-permeable membrane 21 can be layered in the following order: a bottom feed spacer layer 26 a membrane layer 24, a permeate carrier layer 22, a membrane layer 24 and a top feed spacer layer 26, as shown in Fig. 1. As such, the permeate carrier 22 is sandwiched between membrane layers 24, which is then further sandwiched by feed spacer layers 26. The various layers of the membrane 24, biocidal feed spacer 26, and permeate carrier 22 can be assembled, for example, by gluing the various layers together (excluding the feed spacer 26). The reverse osmosis filter 10 can optionally include other layers as may be necessary to complete the final reverse osmosis filter 10, such as the outer wrap layer 28. The assembled layers of membrane 24, biocidal feed spacer 26 and permeate carrier 22 are then wrapped around the perforated central tube 20, preferably in a spiral configuration, as shown in Fig. 1.

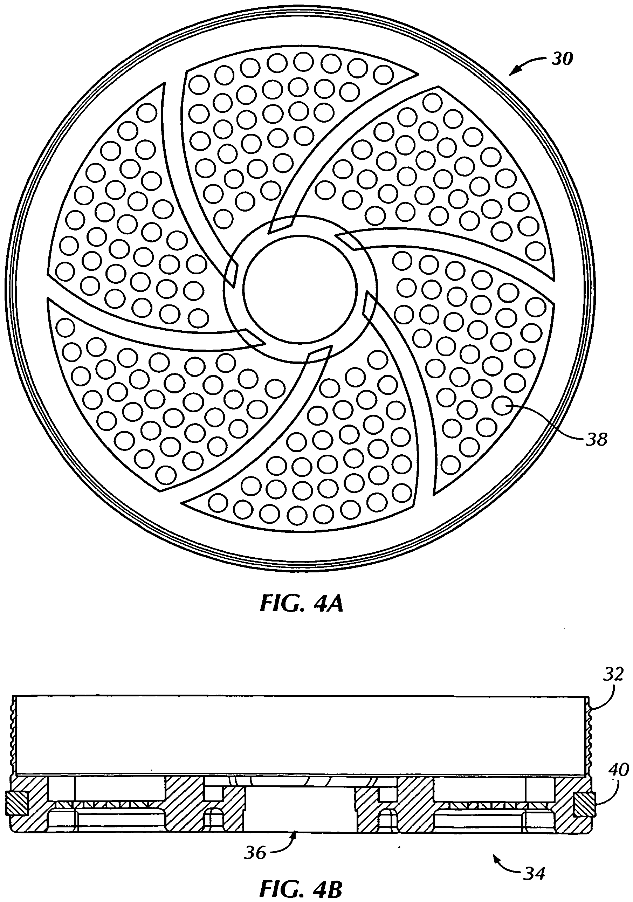

The spiral wrapped layer of the semi-permeable membrane 21 and outer wrap layer 28 are then capped on both the inlet end 12 and outlet end 14 by an end cap 30 (as shown in Figs. 4A and 4B). The end cap 30 includes a generally cylindrical body 32 and a planar end portion 34. The planar end portion 34 includes a central opening 36 that aligns with an open end of the perforated central tube 20. The planar end portion 34 also includes a plurality of apertures 38 that allow for the passage of concentrate 18 therethrough.

The end cap 30 is commonly referred to as an anti-telescoping cap/device. One of the functions of the cap 30 is to prevent the spiral wound semi-permeable membrane 21 from "telescoping" outward in the direction of the feed solution stream. The end cap 30 at the inlet end 12 facing the incoming feed solution stream also serves to redirect the feed solution into the brine-side (*i.e.*, inlet end 12) feed spacer sheets instead of flowing into an annular gap (not shown) between the element and the interior vessel side wall. This can be accomplished by an elastomeric annular ring portion 40 (*i.*e., without apertures) that circumscribes the end cap 30, thereby preventing influx of feed solution into the annular gap.

In operation, feed solution (*e.g*., wastewater, brackish water, saltwater, *etc*.) is fed through the inlet end 12, such that the feed solution initially flows through filter 10 between the layers of the semi-permeable membrane 21 formed by the overlapping layers of the biocidal feed spacer 26. The feed solution passes through the filter 10 at a pressure above an osmotic pressure of the feed solution to promote the reverse osmosis of solvent through membrane layers of the filter 10. The biocidal feed spacer layers 26 not only provide a passageway for the flow of feed solution through the filter 10, it also serves to promote fluid flow that is disturbed, transitional or otherwise unsteady, owing to the mesh-like formation of the feed spacer 26 configuration. The non-laminar flow of feed solution through the feed spacer layers 26 advantageously allow for the feed spacer 26 to maximize its surface area contact with the passing feed solution. That is, unsteady flow results in more eddies and divergent fluid flows, and thus more surface area contact with the feed spacer 26, which further promotes its anti-biofouling capabilities. After the feed solution passes through the biocidal feed spacers 26, the feed solution is filtered by the membrane 24 and then passes to the permeate carrier 22, which then transports the filtered water (or permeate) to the perforated central tube 20. The permeate 16 then exits the reverse osmosis filter 10 through the perforated central tube 20 at the outlet end 14, while the concentrate 18 exits the biocidal feed spacers 26 through the feed spacer layers 26 at that outlet end 14.

The present invention advantageously provides for the exposure of feed solution to a biocidal feed spacer 26 during flow that is transitional or unsteady. This allows for the biocidal feed spacer 26 to better prevent or inhibit biofouling of the feed spacer 26 compared to conventional feed spacers by exposing the feed solution to a biocidal agent source during transitional or unsteady flow caused by the biocidal feed spacer 26, as compared to exposure of the feed solution to a biocidal agent source that may be located within the membrane 24. Moreover, the biocidal feed spacer 26 not only significantly reduces biofilm development on the biocidal feed spacer 26, but also inhibits the biofouling of the contiguous membrane 24 surface areas. That is, the inventors of the present invention have surprisingly discovered that the biocidal feed spacer 26 provides a zone of inhibited biogrowth adjacent the biocidal feed spacer 26. In other words, the membrane layers 24 were discovered to have less biogrowth as a result of their proximity to the biocidal feed spacer 26. This is a significant discovery that provides a way to prevent biofouling within the membrane layer 24 without having to directly provide a biocidal agent within the membrane layer 24 itself, as is the current state of the art for preventing biofouling of membrane layers.

In an alternative embodiment, the cross-flow filtration apparatus 100 can be configured as shown in Fig. 2. Similar to the reverse osmosis cross-flow filtration apparatus 10, the filter 100 includes a perforated central core 120, at least one permeate carrier layer 122 wrapped around the perforated central tube 120, at least one membrane layer 124 proximate the at least one permeate carrier layer 122, and at least one feed spacer 126 proximate the membrane layer 124. An initial layer of permeate carrier 122 is connected to the perforated central core 120 by, e.g., an adhesive tape 102 along a longitudinal portion of the perforated central core 120. In contrast to the previous embodiment, the present embodiment includes multiple layers of a semi-permeable membrane 121 attached to each other to consecutively extend the length of the semi-permeable membrane 121.

The cross-flow filtration apparatus 100 includes a feed spacer 126, similar to feed spacer 26, layered in between a sheet of membrane 124. As shown in Fig. 2, the membrane 124 is folded over itself to form an upper membrane layer 124a and a lower membrane layer 124b that envelopes the feed spacer 126. The feed spacer 126 is preferably attached to the membrane 124 about a folded end 123 of the membrane 124 with a tape or adhesive 125a. The tape or adhesive 125a advantageously reinforces the membrane fold 123. The enveloped membrane 124/feed spacer 126 is then layered between consecutive sheets of permeate carrier 122 attached to one another at an end portion 122a of the permeate carrier 122. The upper membrane layer 124a and lower membrane layer 124b are preferably attached to a respective permeate carrier layer by an adhesive 125b, such as glue.

The aforementioned semi-permeable membrane 121 is extended by attaching the end portion 122a of the next consecutive permeate carrier layer 122 a distance away from the prior attachment point of the previous permeate carrier layer 122. The assembled semi-permeable membrane 121 is then spirally wound around the perforated central tube 120, as described in the above embodiment. The outer wrap layer 128 can be formed out of polypropylene and attached with an adhesive. An outer wrap layer 128 is then wrapped around the entire spiral wound semi-permeable membrane 121. An optional final outer wrap 130 can also be wrapped around the outer wrap 128. The final outer wrap 130 can be formed from an epoxy resin or a glass fiber composite saturated in an epoxy resin.

The following specific non-limiting examples illustrate the present invention for a cross flow filter having a biocidal feed spacer.

### Example 1.

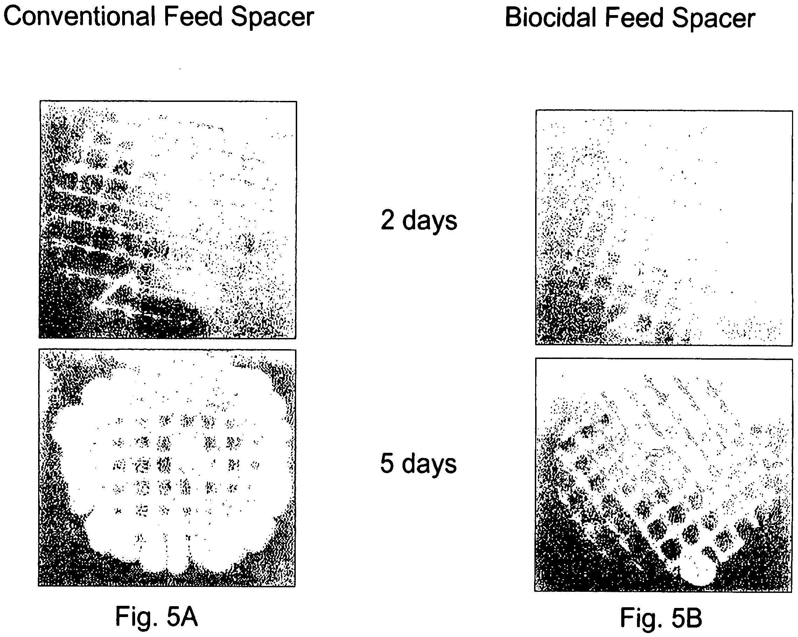

A biocidal feed spacer was manufactured via an extrusion process by extruding a polypropylene base resin that was mixed with about 0.5 wt. % triclosan. A portion of the biocidal feed spacer was then cut and placed on a nutrition medium (*i.e.*, an agar dish) that was inoculated with common bacteria. A feed spacer manufactured in an identical manner as that of the biocidal feed spacer, except for the inclusion of the triclosan biocide, served as a control sample. A portion of the control feed spacer was placed on a nutrition medium that was inoculated with common bacteria. Fig. 5A illustrates the growth of bacteria on the control feed spacer after 2 and 5 days. Fig. 2B illustrates the growth of bacteria on the biocidal feed spacer after 2 and 5 days. As illustrated in Figs. 5A and 5B, the bacterial growth on the biocidal feed spacer after 2 and 5 days is substantially less than that on the control feed spacer.

### Example 2.

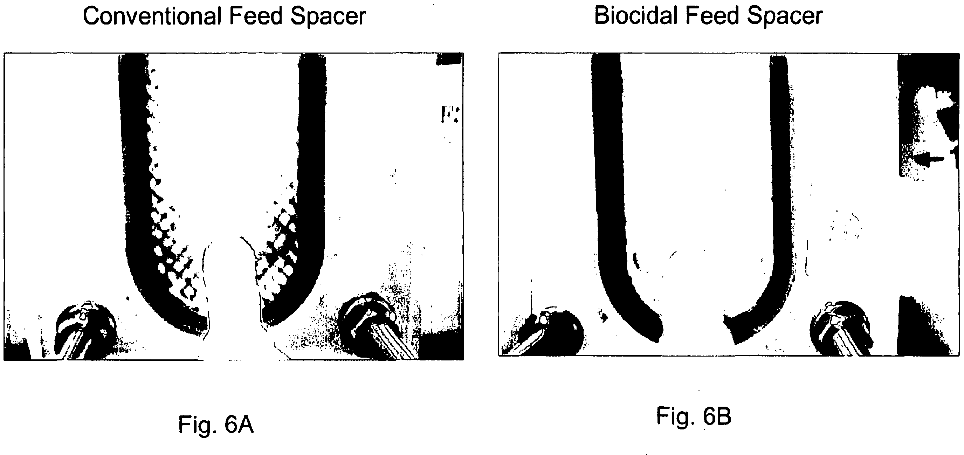

The same biocidal feed spacer and control feed spacer as used for Example 1 were also used in a laboratory flow analysis. As shown in Figs. 6A and 6B, both feed spacers were connected to a flow of waste water feed solution at a flow rate of 0.5 L/min. for a one month time period. As illustrated in Figs. 6A and 6B, the bacterial growth on the biocidal feed spacer (Fig. 6B) was substantially less than that on the control feed spacer (Fig. 6A).

### Example 3.

A reverse osmosis filter having a 0.8 mm thick biocidal feed spacer manufactured as described for Example 1 was evaluated in a water filtration facility known to have a high biofouling rate and compared to a conventional reverse osmosis filter having a 0.8 mm thick feed spacer. These reverse osmosis filters were placed as the lead elements (*i.e*., the first element in a series of elements to receive the flow of feed solution) in the water filtration system of the facility for a six month time period. Afterwards, both reverse osmosis filters were evaluated for pressure drop and the presence of biofilm formation.

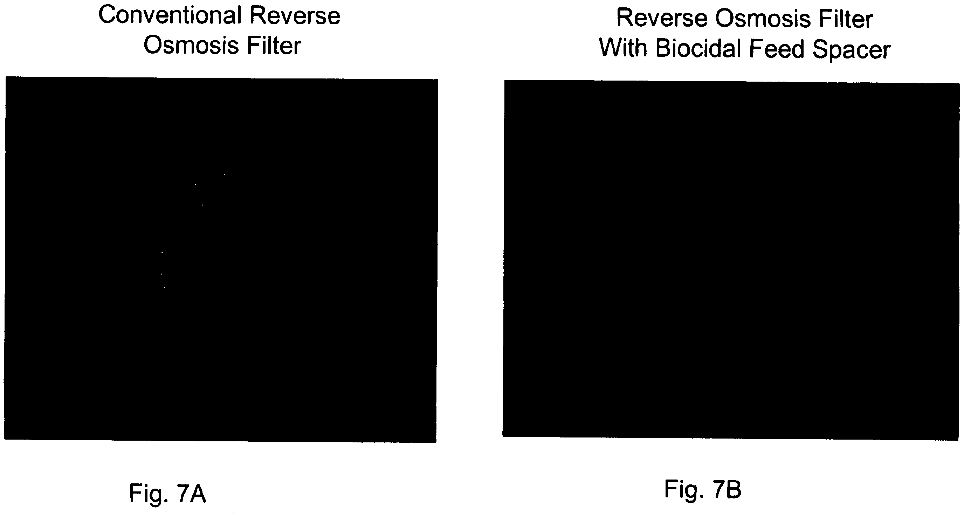

The reverse osmosis filter with biocidal feed spacers exhibited a pressure drop across the filter of 7.3 psi while the conventional reverse osmosis filter exhibited a pressure drop of 11 psi. An increase in pressure drop across the filter is directly related to an increased amount of biofouling of the reverse osmosis filter. In addition, as shown in Figs. 7A and 7B, the reverse osmosis filter with biocidal feed spacers (Fig. 7B) showed substantially less biofouling deposits on and around the feed spacer and adjacent membrane surfaces compared to that of the conventional reverse osmosis filter (Fig. 7A).

The present invention advantageously provides for a water filter apparatus that prevents or inhibits plugging or fouling of the feed spacer by biological growth on or in the filter components. Plugging of the feed channel, for example in a reverse osmosis filter, can result in "telescoping" of the reverse osmosis filter. Telescoping is the movement of filter layers out of alignment in the spiral wound reverse osmosis filter, typically in the direction of feed solution flow. When telescoping occurs, the feed spacer can be pushed out of the reverse osmosis filter, which can result in damage to the membrane's outer surface. By keeping the feed spacer channels free, the pressure drop caused by water flowing through the feed channels (or porosity of the feed spacer) is reduced. Moreover, the biocidal feed spacer significantly inhibits biofouling of the filter membrane proximate the biocidal feed spacer, thus facilitating keeping the membrane clean. Overall, the present invention advantageously improves the performance of the water filtration system and reduces the overall energy consumption and operating costs of the water filter system, while protecting and keeping both the filter's feed spacers and membrane layers cleaner, *i.e*., less biofouling.

It is understood, that this invention is not limited to the particular embodiments disclosed, but it is intended to cover modifications within the scope of the present invention as defined by the appended claims.

## Claims

1. A cross-flow filtration device (10, 100) comprising:
a perforated central tube (20, 120); and a semi-permeable membrane (21, 121) spirally wound around the perforated central tube, the semi-permeable membrane including:
a permeate carrier (22, 122), a membrane (24, 124) adjacent the permeate carrier, and a feed spacer (26, 126) adjacent the membrane, wherein the feed spacer comprises at least one biocidal agent,
**characterized in that**,
the feed spacer (26, 126) is formed from a polymeric material mixed with at least one biocidal agent selected from the group consisting of a quaternary ammonium compound, a silane derivative, and 5-chloro-2-(2,4-dichlorophenoxy)phenol, at about 0.01% to about 10% by weight, via an extrusion process to form a homogenous impregnation with the at least one biocidal agent throughout the entire spacer, the feed spacer comprising a thickness of about 508 µm to 1270 µm (0.020 to 0.050 inches).

2. The cross-flow filtration device (10, 100) of claim 1,
wherein the feed spacer (26, 126) comprises a mesh configuration.

3. The crosss-flow filtration device (10, 100) of claim 1,
wherein the feed spacer (26, 126) further comprises at least one biocidal agent selected from the group consisting of a detergent, a dye, a halogen, and a phenolic compound.

4. The cross-flow filtration device (10, 100) of claim 1,
wherein the feed spacer (26, 126) further comprises a precious metal.

5. The cross-flow filtration device (10, 100) of claim 1,
wherein the feed spacer (26, 126) comprises about 0.25% to about 0.5% by weight biocidal agent.

6. The cross-flow filtration device (10) of claim 1, further comprising an end cap (30) that caps both an inlet end (12) and an outlet end (14) of the cross-flow filtration device, the end cap comprising: a generally cylindrical body (32) and a planar end portion (34) having a central opening (36) aligned with the perforated central tube (20), and a plurality of apertures (38) to allow for the passage of fluid therethrough.

## Patentansprüche

1. Querstrom-Filtrationsvorrichtung (10, 100), aufweisend:
ein perforiertes zentrales Rohr (20,120) und eine semipermeable Membran (21,121), die spiralförmig um das perforierte zentrale Rohr gewickelt ist, wobei die semipermeable Membran umfasst:
einen Permeat-Träger (22, 122), eine an den Permeat-Träger angrenzende Membran (24, 124) und ein an die Membran angrenzendes zuflussseitiges Zwischenteil (26, 126), wobei das zuflussseitige Zwischenteil mindestens einen bioziden Wirkstoff enthält,
**dadurch gekennzeichnet, dass**
das zuflussseitige Zwischenteil (26, 126) aus einem polymeren Material gebildet ist, das mit mindestens einem bioziden Wirkstoff, der aus der Gruppe, die aus einer quartären Ammoniumverbindung, aus einem Silanderivat und aus 5-Chlor-2-(dichlorphenoxy)-pheneol besteht, ausgewählt ist, mit einem Gewichtsanteil von ungefähr 0,01% bis ungefähr 10% durch ein Extrusionsverfahren derart mit dem polymeren Material vermischt ist, dass eine homogene Imprägnierung des gesamten Zwischenteils mit dem mindestens einen bioziden Wirkstoff erreicht ist, wobei das zuflussseitige Zwischenteil eine Dicke von ungefähr 508 bis 1270 µm aufweist.

2. Querstrom-Filtrationsvorrichtung (10, 100) nach Anspruch 1, wobei das zuflussseitige Zwischenteil (26, 126) eine netzförmige Ausgestaltung umfasst.

3. Querstrom-Filtrationsvorrichtung (10, 100) nach Anspruch 1, wobei das zuflussseitige Zwischenteil (26, 126) außerdem mindestens einen bioziden Wirkstoff aufweist, der aus der Gruppe ausgewählt wurde, die aus einem Reinigungsmittel, einem Farbstoff, einem Halogen und einer Phenolverbindung besteht.

4. Querstrom-Filtrationsvorrichtung (10, 100) nach Anspruch 1, wobei das zuflussseitige Zwischenteil (26, 126) außerdem ein Edelmetall aufweist.

5. Querstrom-Filtrationsvorrichtung (10, 100) nach Anspruch 1, wobei das zuflussseitige Zwischenteil (26, 126) ungefähr 0,25% bis ungefähr 0,5% Gewichtsanteile bioziden Wirkstoffs aufweist.

6. Querstrom-Filtrationsvorrichtung (10, 100) nach Anspruch 1, die außerdem eine Endkappe (30) aufweist, welche sowohl eine Zuflussseite (12) als auch eine Abflussseite (14) der Querstrom-Filtrationsvorrichtung abschließt, wobei die Endkappe umfasst: ein im Westentlichen zylindrisches Gehäuse (32) und ein flaches Endstück (34), aufweisend: eine zentrale Öffnung (36), die mit dem perforierten zentralen Rohr (20) axial fluchtet, sowie eine Vielzahl von Öffnungen (38), um den Durchgang von Flüssigkeit durch diese zu ermöglichen.

## Revendications

1. Disposition de filtration à écoulement transversal (10, 100) comprenant :
un tuyau central perforé (20, 120) et une membrane semi-perméable (21, 121) enroulée en spirale autour du tuyau central perforé, la membrane semi-perméable comprenant :
un support de permeat (22, 122), une membrane (24, 124) adjacente au support de permeat, et un élément d'espacement d'alimentation (26, 126) adjacent à la membrane, dans lequel l'élément d'espacement d'alimentation comprend au moins un agent biocide,
**caractérisé en ce que**
l'élément d'espacement d'alimentation (26, 126) est formé à partir d'un matériau polymère mélangé avec au moins un agent biocide sélectionné parmi le groupe constitué d'un composé d'ammonium quaternaire, d'un dérivé de silane, et du 5-chloro-2-(2,4-diclorophénoxy)phénol, d'environ 0,01 % à environ 10 % en poids, par l'intermédiaire d'un processus d'extrusion afin de former une imprégnation homogène avec au moins un agent biocide à travers l'ensemble de l'élément d'espacement, l'élément d'espacement d'alimentation ayant une épaisseur d'environ 508 µm à 1 270 µm (0,020 à 0,050 pouce).

2. Dispositif de filtration à écoulement transversal (10, 100) selon la revendication 1,
dans lequel l'élément d'espacement d'alimentation (26, 126) comprend une configuration en treillis.

3. Dispositif de filtration à écoulement transversal (10, 100) selon la revendication 1,
dans lequel l'élément d'espacement d'alimentation (26, 126) comprend en outre au moins un agent biocide sélectionné parmi le groupe constitué d'un détergent, d'un colorant, d'un halogène et d'un composé phénolique.

4. Dispositif de filtration à écoulement transversal (10, 100) selon la revendication 1,
dans lequel l'élément d'espacement d'alimentation (26, 126) comprend en outre un métal précieux.

5. Dispositif de filtration à écoulement transversal (10, 100) selon la revendication 1,
dans lequel l'élément d'espacement d'alimentation (26, 126) comprend environ 0,25 % à environ 0,5 % en poids d'agent biocide.

6. Dispositif de filtration à écoulement transversal (10, 100) selon la revendication 1, comprenant en outre un bouchon d'extrémité (30) qui couvre à la fois une extrémité d'entrée (12) et une extrémité de sortie (14) du dispositif de filtration à écoulement transversal, le bouchon d'extrémité comprenant : un corps globalement cylindrique (32) et une partie d'extrémité plane (34) comportant : une ouverture centrale (36) alignée avec le tuyau central perforé (20), et une pluralité d'ouvertures (38) pour permettre le passage du fluide à travers celles-ci.
